# EUROPÄISCHE PATENTSCHRIFT

(11) **EP 1 165 984 B1**
(45) Veröffentlichungstag und Bekanntmachung des Hinweises auf die Patenterteilung: **14.04.2004**
(21) Anmeldenummer: 01919122.0
(22) Anmeldetag: 01.02.2001
(51) Int. Cl.: F16F 1/387, F16F 1/366

(54) **GUMMILAGER**
RUBBER BUSH
SUPPORT EN CAOUTCHOUC

(30) Priorität: 04.02.2000 DE 10004936
(43) Veröffentlichungstag der Anmeldung: 02.01.2002
(73) Patentinhaber: ZF Lemförder Metallwaren AG, 49441 Lemförde (DE)
(72) Erfinder: TATURA, Alfred, 49401 Damme (DE)
(86) Internationale Anmeldenummer: PCT/DE2001/000400
(87) Internationale Veröffentlichungsnummer: WO 2001/057414

(56) Entgegenhaltungen:
- DE-A- 3 346 665
- FR-A- 2 715 446
- PATENT ABSTRACTS OF JAPAN vol. 012, no. 081 (M-676), 15. März 1988 (1988-03-15) & JP 62 220736 A (HONDA MOTOR CO LTD), 28. September 1987 (1987-09-28)

## Beschreibung

Die Erfindung betrifft ein Gummilager mit verbesserter Aufnahme von Belastungen, die infolge Torsion und Kardanik entstehen. Sie bezieht sich vorzugsweise auf Einfach-Gummilager, bei denen die koaxial angeordneten Einlegeteile mittels des Elastomers festhaftend miteinander verbunden sind. Die grundsätzliche Überlegung der Erfindung ist aber auch auf mehrteilige Gummilager übertragbar oder auf solche, bei denen zu bestimmten Zwecken zusätzliche Einlegeteile oder Anschlagscheiben vorgesehen sind.

Gummilager werden hauptsächlich im Fahrzeugbau zu den vielfältigsten Zwecken eingesetzt. Je nach dem konkreten Einsatzzweck werden dabei sehr unterschiedliche Belastbarkeitsanforderungen an die Lager gestellt. Insbesondere Lager, welche im Bereich des Fahrwerks, zum Beispiel im Zusammenhang mit der Radaufhängung, eingesetzt werden, sind auch einer starken Belastung durch Torsion bzw. Kardanik ausgesetzt. Insoweit ist es erforderlich, die Lager im Hinblick auf ihre axiale und radiale Steifigkeit an diese Belastungen anzupassen.
Einfach-Gummilager herkömmlicher Konstruktion weisen ohne zusätzliche Maßnahmen ein "natürliches" Verhältnis zwischen axialer und radialer Steifigkeit von etwa 1 : 3 auf Um dieses Verhältnis im Sinne einer besseren Anpassung an auftretende kardanische Belastungen oder Beanspruchung durch Torsion zu verändern, ist es bisher erforderlich, für die Lager komplizierte Einlegeteile oder Anschlagscheiben vorzusehen. Dies führt zu teilweise recht aufwendigen Konstruktionen. Zudem bringen derartige Teile an anderen Stellen wiederum unerwünschte Einschränkungen im Hinblick auf die Umsetzung von Torsion und Kardanik mit sich. Die aufwendige Konstruktion bedingt eine aufwendige Fertigung und dadurch hohe Fertigungskosten. Weiterhin ergeben sich größe Aufwendungen für die Prüfung und die Gestaltung entsprechender Prüfungsaufbauten. Auch die Montage beim Kunden, insbesondere die genaue Justierung im Hinblick auf die richtungsabhängige Belastbarkeit, ist vergleichsweise kompliziert.
In der DE 28 38 391 A1 wird ein Gummilager beschrieben, welches durch eine spezielle Gestaltung seines Innenteils und der Außenhülse eine verbesserte Aufnahme axial eingetragener Kräfte gewährleistet. Bei diesem Lager sind die Mantelflächen des Innenteils und der Außenhülse gegen die Lagerachse geneigt. Beim Einleiten axialer Kräfte werden das Innenteil und die Außenhülse durch ihre spezielle Formgebung radial gegeneinander verschoben. Jedoch kommt ein entsprechend der Schrift gestaltetes Lager, insbesondere im Hinblick auf die Form seiner Außenhülse, nicht für jeden Einsatzzweck in Betracht.
Aus der DE 33 46 665 A1 ist ein elastisches Lager zur Aufnahme kardanischer Auslenkbewegungen bekannt. Gemäß der dargestellten Lösung sind an beiden Stirnseiten des Gelenks hohle Ausformungen in den Gelenkkörper eingebracht. Hierdurch ist für den Gelenkkörper beim Auftreten kardanischer Auslenkbewegungen eine Zwangsführung gegeben.

Aufgabe der Erfindung ist es, ein Gummilager zu schaffen, welches bei einem einfachen Aufbau hinsichtlich des Verhältnisses zwischen axialer und radialer Steifigkeit in weiten Grenzen variierbar und so an den jeweiligen Einsatzzweck, insbesondere im Hinblick auf dabei gegebenenfalls auftretende Belastungen durch Torsion und/oder Kardanik, anpassbar ist.

Die Aufgabe wird durch ein Gummilager mit den Merkmalen des Hauptanspruchs gelöst. Vorteilhafte Weiterbildungen bzw. Ausgestaltungen des erfindungsgemäßen Lagers sind durch die Unteransprüche gegeben.

Das Gummilager, welches vorzugsweise als Einfach-Gummilager ausgebildet ist, besteht in an sich bekannter Weise aus einem im wesentlichen zylindrischen Innenteil, einer rohrförmigen koaxial um das Innenteil angeordneten Außenhülse sowie einem aus einem Elastomer gebildeten, zwischen dem Innenteil und der Außenhülse eingeordneten und mit ihnen durch Vulkanisation verbundenen Druckkörper. Innenteil und Außenhülse solcher Gummilager weisen meist eine zylindrische Form auf. Für bestimmte Einsatzzwecke kann die Form aber auch hiervon abweichen, so kann die Querschnittsfläche auch eine elliptische oder hieran angenäherte Form oder die Teile können im Verlauf ihrer axialen Erstreckung Absätze aufweisen. Die Anwendbarkeit der grundsätzlichen erfinderischen Idee bleibt hiervon unberührt.

In erfindungswesentlicher Weise erstrecken sich in axialer Richtung in das Lagerinnere in das Elastomer, jeweils ausgehend von den axialen Enden, zwei in einem vollständigen Umlauf um die Lagerachse verlaufende und in besonderer Weise gestaltete Freigräben. Die besondere Gestaltung der Freigräben besteht darin, dass sich ihr radialer Abstand zur Lagerachse und/oder ihre Breite zyklisch verändert, wobei zwischen ihnen im Hinblick auf ihren durch die Veränderung des radialen Abstandes zur Lagerachse und/oder der Breite bestimmten Verlauf eine Phasenverschiebung besteht. Der Verlauf beider Freigräben folgt dabei vorzugsweise dem gleichen Zyklus. Erfindungsgemäß bilden außerdem in dem durch das Elastomer gebildeten Druckkörper die Fasern gleicher axialer Belastbarkeit durch eine wechselnde Verlaufrichtung einen Kreuzverband aus. Als erfindungswesentlich ist es anzusehen, dass durch die Festlegung der Winkel der den Kreuzverband bildenden Fasern gegenüber der Lagerachse und/oder durch eine unterschiedliche Ausformung der Konturverläufe der Freigräben, bei Lagern mit ansonsten grundsätzlich gleichem Aufbau, das Verhältnis zwischen radialer und axialer Steifigkeit sehr einfach variiert werden kann.
Es ist im Sinne der Erfindung, wenn in einer Ansgestaltung außerdem die axiale Tiefe beider Freigräben, bezogen auf den Umfang des Lagers, variiert und sie zumindest abschnittsweise beide über die axiale Mitte hinaus in das Lagerinnere hineinragen. Dabei ist die zwischen ihren Verläufen bestehende Phasenverschiebung derart gewählt, dass die Sohlen der Freigräben in den Abschnitten des Lagerumfanges, in denen sich beide Freigräben über die Lagermitte hinaus erstrecken, gegenüber der Lagerachse einen unterschiedlichen radialen Abstand aufweisen.

Bei entsprechender Festlegung der Winkel der den Kreuzverband bildenden Fasern und/oder der Geometrie der Freigräben ist das Verhältnis zwischen axialer und radialer Steifigkeit des Lagers im Bereich zwischen 1 : 3 und annähernd 1 : 1 einstellbar.
Entsprechend einer möglichen Ausgestaltung des Lagers ist der sich zyklisch ändernde Abstand der Freigräben zur Lagerachse durch einen annähernd sinusförmigen Verlauf ihrer inneren Kontur bestimmt. Diese innere Kontur ist wiederum durch die jeweilige Materialdicke des Elastomers im Bereich seiner Verbindung mit dem Lagerinnenteil festgelegt. Eine weitere Ausgestaltungsmöglichkeit ist durch einen entsprechenden Verlauf der äußeren Kontur der Freigräben gegeben. Dabei folgt die Materialdicke des Elastomers im Bereich seiner Verbindung mit der Außenhülse ebenfalls einem sinusförmigen Verlauf. Hierdurch ist eine entsprechende zyklische Variation der Breite der Freigräben gegeben.
In Kombination der beiden vorstehend dargestellten Möglichkeiten ergibt sich außerdem eine sinnfällige Ausgestaltungsmöglichkeit dadurch, dass sowohl die Innenkontur als auch die Außenkontur der Freigräben einen sinusförmigen Verlauf aufweist. Durch eine entsprechende Phasenverschiebung zwischen den beiden sinusförmigen Konturverläufen werden dabei bei dieser Ausgestaltungsvariante Verläufe für die Freigräben erreicht, bei denen sich ihr Abstand zur Lagerachse, bei gleichbleibender Breite, einem sinusförmigen Verlauf folgend ändert.
Vorteilhafterweise erstreckt sich der sinusförmige Verlauf der inneren und/oder der äußeren Kontur der Freigräben zumindest über zwei Zyklen. Das heißt, dass im Konturverlauf zumindest zwei Punkte maximaler Materialdicke und zwei Punkte minimaler Materialdicke des Elastomers im Bereich seiner Verbindung mit dem Innenteil und/oder der Außenhülse gegeben sind.
Besonders vorteilhaft ist eine Ausgestaltung des Lagers, bei welcher der Kreuzverband zwischen den Fasern gleicher axialer Belastbarkeit derart ausgebildet ist, dass eine erste Faser der Freigrabenkontur eine Verbindung mit einem axialen Ende des Lagerinnenteils und der Außenhülse hat, während eine zweite Faser, welche die erste im Winkel kreuzt, mit dem anderen axialen Ende des Lagerinnenteils sowie mit der Außenhülse verbunden ist. Entsprechend einer vorteilhaften Weiterbildung des erfindungsgemäßen Lagers können in dem durch das Elastomer gebildeten Druckkörper axial verlaufende Durchbrüche vorgesehen sein. Durch diese Maßnahme ist es möglich, dem Lager in seiner Umfangsrichtung unterschiedliche radiale Steifigkeiten zu verleihen. Eine andere vorteilhafte Möglichkeit zur Beeinflussung des Verhaltens bei Torsion bzw. kardanischer Belastung ist durch eine Weiterbildung des erfindungsgemäßen Lagers gegeben, bei der auf den die Konturen der Freigräben festlegenden Fasern lokale Ausbeulungen ausgebildet sind. Diese Ausbeulungen ermöglichen eine noch bessere Verteilung der bei Torsion oder Kardanik auftretenden Spannungen im Lager. Hierzu sind diese Ausbeulungen vorzugsweise auf der Innenkontur der Freigräben in der Umgebung der Punkte größter Materialdicke des Elastomers im Bereich seiner Verbindung mit dem Innenteil ausgebildet. Die Erfindung soll nachfolgend anhand eines Ausführungsbeispieles näher erläutert werden. In den zugehörigen Zeichnungen zeigen:

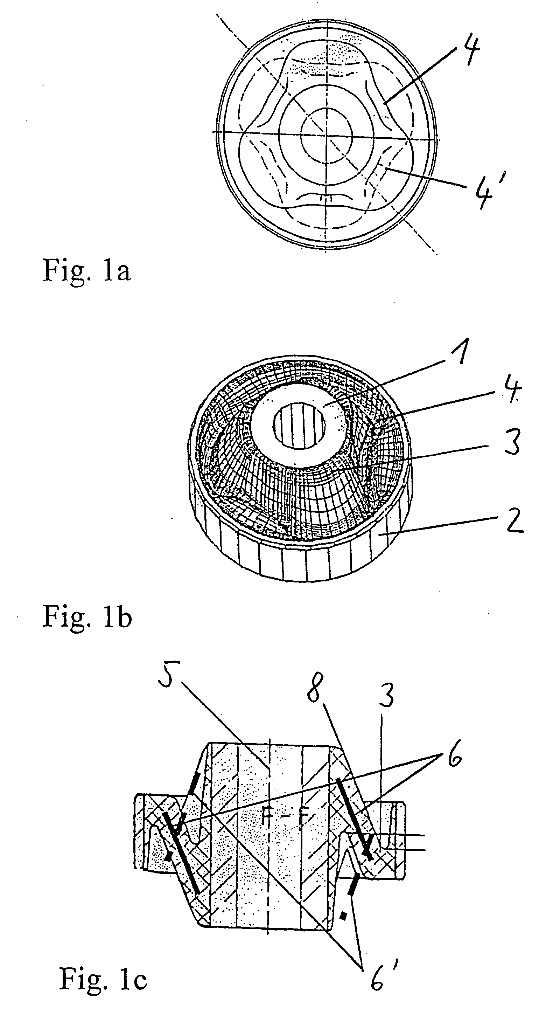

- Fig. 1a:: Eine Draufsicht auf das erfindungsgemäße Lager aus axialer Richtung in einer schematischen Darstellung;
- Fig. 1b:: Eine isometrische Darstellung des Lagers gemäß Fig. 1a;
- Fig. 1 c:: Einen axialen Schnitt durch das Lager gemäß Fig. 1a;
- Fig. 2a: Eine Draufsicht auf eine Ausgestaltungsform des erfindungsgemäßen Lagers aus axialer Richtung mit verschiedenen angetragenen Schnittlinien;
- Fig. 2b: Eine isometrische Darstellung des Lagers nach Fig. 2a;
- Fig. 2c-j:: Unterschiedliche Schnittdarstellungen des Lagers mit entlang der Schnittlinien nach Fig. 2a geführten axialen Schnitten;
- Fig. 3:: Einen axialen Schnitt des Lagers mit zusätzlichen lokalen Ausbeulungen im Bereich der Innenkontur eines Freigrabens.
- Fig. 4a:: Eine isometrische Darstellung eines gemäß der Erfindung gestalteten Lagers mit modifizierten Formen für Innenteil und Außenhülse
- Fig. 4b:: Einen axialen Schnitt durch das Lager nach Fig. 4a

Durch die Figuren 1a und 1b wird der grundsätzliche Aufbau eines entsprechend der Erfindung gestalteten Lagers veranschaulicht. Die Fig. 1a betrifft eine vereinfachte schematische Darstellung einer Draufsicht aus axialer Richtung. In der Fig. 1b ist das Lager gemäß Fig. 1a nochmals in einer isometrischen Darstellung wiedergegeben.
Das Lager besteht in an sich bekannter Weise aus einem im Wesentlichen zylindrischen Innenteil 1, einer rohrförmigen koaxial um das Innenteil 1 angeordneten Außenhülse 2 sowie einem zwischen den vorgenannten metallischen Teilen eingeordneten Druckkörper. Der durch das Elastomer 3 bzw. aus Gummi gebildete Druckkörper ist mit dem Innenteil 1 und der Außenhülse 2 durch Vulkanisation verbunden. In den Figuren ist der Verlauf der in beiden axialen Lagerhälften ausgebildeten Freigräben 4, 4' deutlich erkennbar. In dem dargestellten Beispiel variiert der Abstand des Freigrabens 4, 4' gegenüber der Lagerachse 5 nach einem sinusförmigen Verlauf. Wie zu erkennen, weist der Verlauf drei Zyklen auf. Es sind demzufolge jeweils drei Bereiche maximaler und drei Bereiche minimaler Materialstärke des mit dem Innenteil 1 verbundenen Elastomers 3 ausgebildet. Auch im Bereich der Außenhülse 2 weist die Materialstärke des Elastomers 3 einen sinusförmigen Verlauf auf. Allerdings ist der Verlauf der Materialstärke hier gegenüber dem am Innenteil 1 phasenverschoben. Dies wird durch die Fig. 1 a verdeutlicht, in welcher der Verlauf des Freigrabens 4, 4' in der der Ansichtsseite gegenüberliegenden Lagerhälfte als gestrichelte Linie angedeutet ist. Bei der dargestellten beispielhaften Ausführungsform variiert zwar der Abstand der Freigräben 4, 4' gegenüber der Lagerachse 5, ihre Breite bleibt aber im gesamten Verlauf annähernd gleich. Dies ist in der schematischen Darstellung der Fig. 1a nicht erkennbar, wird aber durch die Fig. 1b gut verdeutlicht. Auch ist erkennbar, dass der Freigraben 4' in seinem Verlauf gegenüber dem Freigraben 4 eine Phasenverschiebung aufweist.
Durch die Fig. 1c ist eine Schnittdarstellung des Lagers nach der Fig. 1a bzw. 1b gegeben. Zum besseren Verständnis ist dabei der Faserverlauf der den Kreuzverband bildenden Fasern 6, 6' des Druckkörpers hervorgehoben dargestellt. Es wird erkennbar, dass eine erste Faser 6 der Gummikontur 8 am oberen axialen Ende des Lagers und der Außenhülse 2 gebunden ist. Eine zweite, die erste Faser 6 kreuzende Faser 6', ist mit dem unteren axialen Ende und ebenfalls der Außenhülse 2 verbunden. Durch eine entsprechende Festlegung des Winkels der Fasern 6, 6' gegenüber der Lagerachse 5 ist das Verhältnis zwischen radialer und axialer Steifigkeit festlegbar. Je spitzer dieser Winkel ist, umso mehr erhöht sich dabei die axiale Steifigkeit. Bei gleichzeitiger entsprechender Gestaltung des Verlaufs der Freigräben 4, 4' lässt sich im Hinblick auf die radiale und die axiale Belastbarkeit annähernd ein Verhältnis von 1 : 1 einstellen. Anhand der Schnittdarstellung der Fig. 1c wird dabei sehr gut deutlich, inwieweit die radiale Steifigkeit durch die sich in axialer Richtung überlappenden Freigräben 4, 4' herabgesetzt wird. Durch die Phasenverschiebung des Verlaufs der Freigräben 4, 4' weisen die sich bezogen auf die axiale Erstreckung überschneidenden Sohlen 10, 10' der Freigräben 4, 4' einen unterschiedlichen radialen Abstand zur Lagerachse 5 auf. Hierdurch wird der Zusammenhalt des Druckkörpers gewährleistet und gleichzeitig seine Dicke herabgesetzt. Dadurch wird das Lager in radialer Richtung hinsichtlich seiner Kennung weicher.

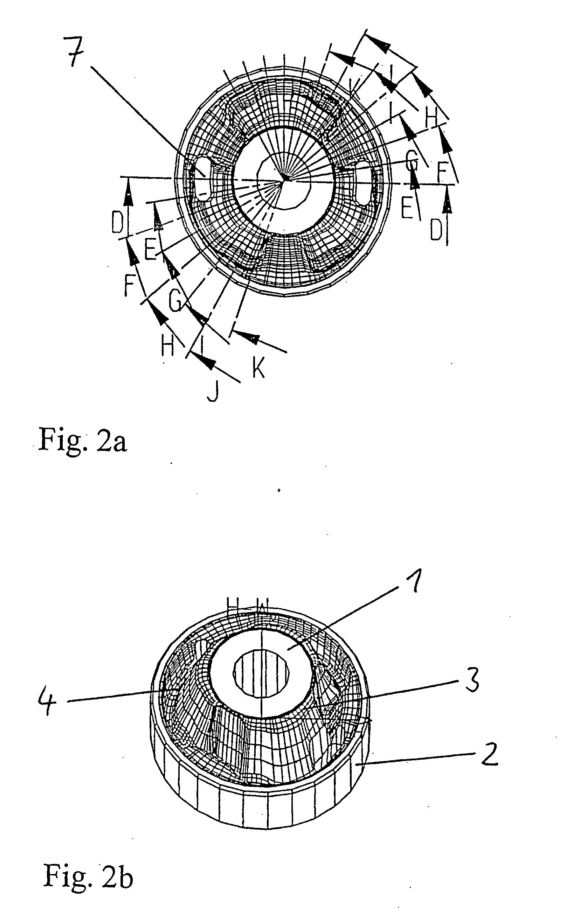

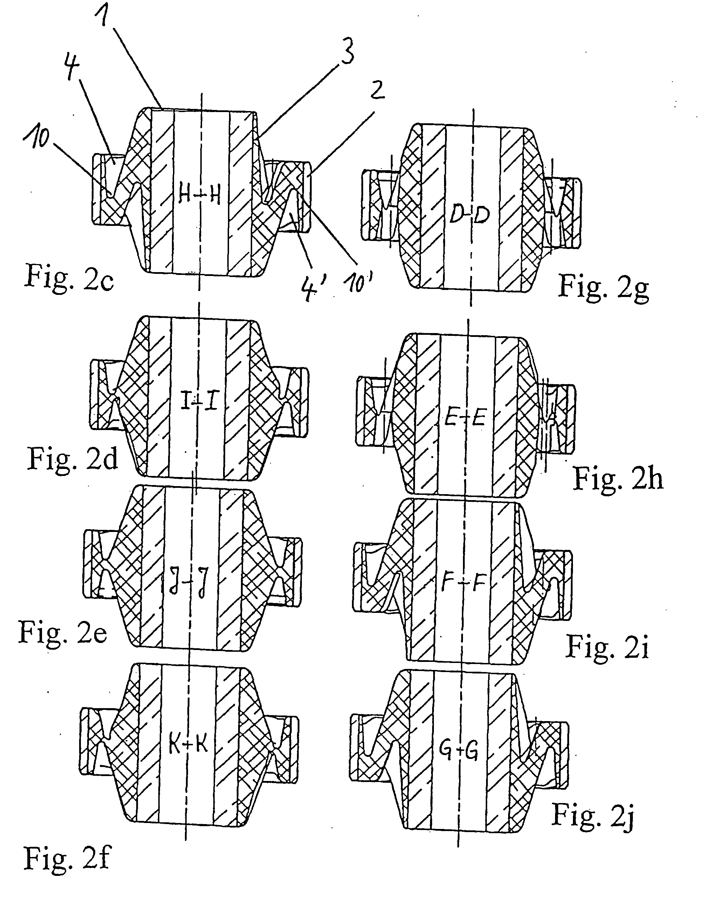

In der Fig. 2a ist nochmals eine Ausführungsform des erfindungsgemäßen Lagers in einer Draufsicht aus axialer Richtung dargestellt, an welche im Hinblick auf die Axialschnittdarstellungen der Fig. 2c - j unterschiedlich verlaufende Schnittlinien angetragen sind. In diesem Beispiel weisen die Freigräben 4, 4' einen etwas vom Beispiel der Fig. 1 abweichenden Konturverlauf auf. Aber auch hier ändern sich der Grabenabstand zur Lagerachse 5 und die Grabenbreite zyklisch. Dies wird insbesondere durch die Fig. 2b nochmals gut veranschaulicht. Zusätzlich zu den Freigräben 4, 4' sind in dem Elastomer noch zwei Durchbrüche vorgesehen, durch die das Lager auch in Bezug auf unterschiedliche radiale Richtungen unterschiedliche Steifigkeiten besitzt.
Durch die Figuren 2c bis j wird das Lager nochmals in unterschiedlichen
Schnittdarstellungen jeweils entlang der in der Fig. 2a angetragenen Schnittlinien dargestellt. Hierdurch wird nochmals verdeutlicht, wie sich die beiden Freigräben 4, 4' mit den definierten Wechselzyklen ihrer Konturen zwischen dem Innen- und dem Außenteil 1, 2 winden. Auch der Kreuzverband, der den Druckkörper ausbildenden Fasern 6, 6' wird hierbei erkennbar.

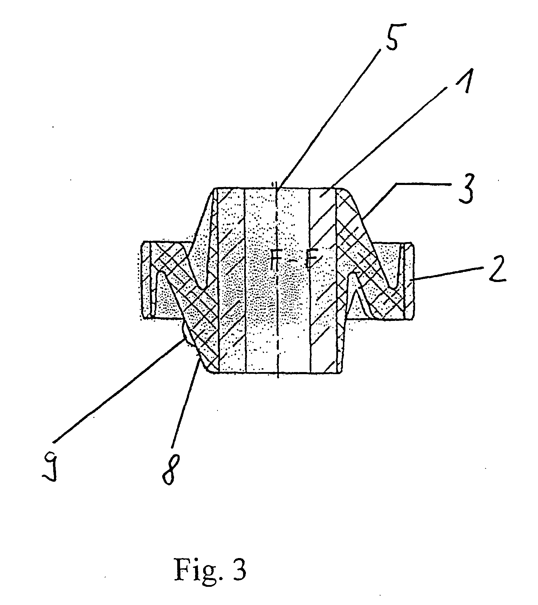

In der Fig. 3 ist eine vorteilhafte Weiterbildung des ansonsten in gleicher Weise, wie durch die Figuren 1 und 2 verdeutlicht, ausgestalteten Lagers dargestellt. Bei dieser Weiterbildung der Erfindung sind im Bereich der Stege des Elastomers 3, d.h. also in der Umgebung der Punkte maximaler Materialdicke des mit dem Innenteil 1 verbundenen Elastomers 3, am Umfang umlaufend, lokale Ausbeulungen 9 ausgebildet. Durch diese Ausbeulungen 9 kann eine Kalibrierung und Feinabstimmung des Lagers zur besseren Spannungsaufteilung bei Belastung durch Torsion und Kardanik erreicht werden.

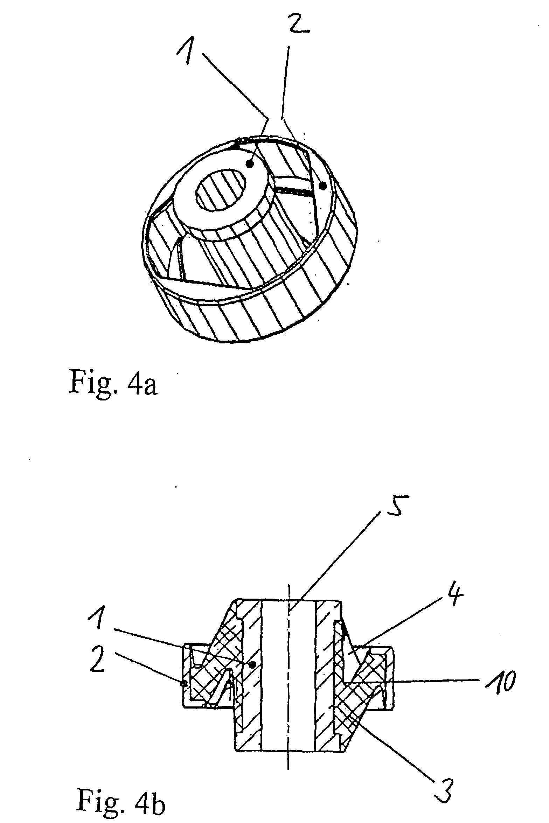

Durch die Figuren 4a und 4b ist eine Ausbildung des erfindungsgemäßen Lagers veranschaulicht, bei der die Einlegeteile, nämlich das Innenteil 1 und die Außenhülse 2 in ihrer Form gegenüber zuvor erläuterten Ausführungsformen etwas modifiziert sind. Mit dem Ziel einer optimalen Anpassung an den vorgesehenen Einsatzzweck kann dadurch das Kennungsverhalten zusätzlich beeinflusst und gegebenenfalls das Verhältnis von radialer und axialer Steifigkeit im Sinne dieser Optimierung kalibriert werden. In dem gezeigten Beispiel liegen die Sohlen 10, 10' der Freigräben 4, 4' in einer Ebene, so dass keine Hinterschneidung bzw. kein Freiraum gebildet ist.

Das erfindungsgemäße Gummilager zeichnet sich dadurch aus, dass es durch seinen vergleichsweise einfachen, ohne zusätzliche Einlegeteile auskommenden Aufbau, hinsichtlich des Verhältnisses zwischen radialer und axialer Steifigkeit, ohne Änderung der grundsätzlichen konstruktiven Gestaltung, in weiten Grenzen variierbar ist. Dies bringt eine einfache Fertigung und eine entsprechende Reduzierung der Fertigungskosten mit sich. Auch die Prüfung der Kennungsverhältnisse gestaltet sich aufgrund der Entbehrlichkeit zusätzlicher Hilfsmittel einfach. Dies gilt in gleicher Weise für die Montage beim Kunden. Durch das Fehlen zusätzlicher Einlegeteile besitzt das Lager zudem ein im Vergleich zu anderen bekannten Ausführungsformen geringeres Gewicht. Dennoch kann das Lager große Torsionsmomente aufnehmen und durch lange Kardanikwege auch größeren kardanischen Belastungen widerstehen.

### Bezugszeichenliste:

- 1: Innenteil
- 2: Außenhülse
- 3: Elastomer
- 4,4': Freigraben
- 5: Lagerachse
- 6,6': Faser
- 7: Durchbruch
- 8: Kontur
- 9: Ausbeulung
- 10: Sohle

## Patentansprüche

1. Gummilager, vorzugsweise Einfach-Gummilager, mit einem insbesondere zylindrischen Innenteil (1), einer rohrförmigen, koaxial um das Innenteil (1) angeordneten Außenhülse (2) sowie einem aus einem Elastomer (3) bestehenden, zwischen dem Innenteil (1) und der Außenhülse (2) eingeordneten und mit ihnen durch Vulkanisation verbundenen Druckkörper, bei welchem sich in das Elastomer (3), jeweils ausgehend von den axialen Lagerenden, zwei in axialer Richtung in das Lagerinnere, in einem vollständigen Umlauf um die Lagerachse (5) verlaufende Gräben, Freigräben (4, 4') genannt, erstrecken, deren radialer Abstand zur Lagerachse (5) und/oder deren Breite sich zyklisch stetig verändert, wobei zwischen den beiden Freigräben (4, 4'), im Hinblick auf ihren durch die Veränderung des radialen Abstandes zur Lagerachse (5) und/oder der Breite bestimmten sowie vorzugsweise dem gleichen Zyklus folgenden Verlauf eine Phasenverschiebung besteht und in dem durch das Elastomer (3) gebildeten Druckkörper Fasern (6, 6') gleicher axialer Belastbarkeit durch eine wechselnde Verlaufsrichtung einen Kreuzverband bilden, so dass bei Lagern mit ansonsten grundsätzlich gleichem Aufbau das Verhältnis zwischen radialer und axialer Steifigkeit durch unterschiedliche Festlegung der Winkel der den Kreuzverband bildenden Fasern (6, 6') gegenüber der Lagerachse (5) und/oder durch unterschiedliche Ausformung der Konturverläufe der Freigräben (4, 4') variierbar ist.

2. Gummilager nach Anspruch 1, **dadurch gekennzeichnet, dass** die axiale Tiefe beider Freigräben (4, 4') bezogen auf den Umfang des Lagers variiert und zumindest abschnittsweise beide Freigräben (4, 4') über die axiale Mitte hinaus in das Lagerinnere hineinragen, wobei die zwischen ihren Verläufen bestehende Phasenverschiebung derart gewählt ist, dass die Sohlen (10, 10') der Freigräben (4, 4') in den Abschnitten des Lagerumfangs, in denen sich beide Freigräben (4, 4') über die Lagermitte hinaus erstrecken, gegenüber der Lagerachse (5) einen unterschiedlichen radialen Abstand aufweisen.

3. Gummilager nach Anspruch 1 oder 2, **dadurch gekennzeichnet, dass** das Verhältnis zwischen axialer und radialer Steifigkeit durch entsprechende Festlegung der Winkel der den Kreuzverband bildenden Fasern (6, 6') gegenüber der Lagerachse (5) und/oder die Geometrie der Freigräben (4, 4') im Bereich zwischen 1 : 3 und annähernd 1 : 1 einstellbar ist.

4. Gummilager nach einem der Ansprüche 1 bis 3, **dadurch gekennzeichnet, dass** der sich zyklisch ändernde Abstand der Freigräben (4, 4') zur Lagerachse (5) durch einen annähernd sinusförmigen Verlauf ihrer inneren, durch die jeweilige Materialdicke des Elastomers im Bereich seiner Verbindung mit dem Lagerinnenteil (1) festgelegten, Kontur bestimmt ist.

5. Gummilager nach einem der Ansprüche 1 bis 3, **dadurch gekennzeichnet, dass** die sich zyklisch ändernde Breite der Freigräben (4, 4') durch einen annähernd sinusförmigen Verlauf ihrer äußeren, durch die jeweilige Materialdicke des Elastomers im Bereich seiner Verbindung mit der Außenhülse (2) des Lagers festgelegten, Kontur bestimmt ist.

6. Gummilager nach einem der Ansprüche 1 bis 3, **dadurch gekennzeichnet, dass** der Abstand der Freigräben (4, 4') zur Lagerachse (5) bei gleichbleibende Breite einen annähernd sinusförmigen Verlauf aufweist, indem ihre durch die jeweilige Materialdicke des Elastomers im Bereich seiner Verbindung mit der Außenhülse (2) des Lagers festgelegte äußere Kontur bei entsprechender Phasenverschiebung gegenüber der inneren Kontur ebenfalls einem sinusförmigen Verlauf folgt.

7. Gummilager nach einem der Ansprüche 3 bis 6, **dadurch gekennzeichnet, dass** der sinusförmige Verlauf der inneren und/oder der äußeren Kontur der Freigräben (4, 4') zumindest zwei Zyklen aufweist, so dass im Konturverlauf zumindest zwei Punkte maximaler Materialdicke und zwei Punkte minimaler Materialdicke des Elastomers im Bereich seiner Verbindung mit dem Innenteil (1) und/oder der Außenhülse (2) gegeben sind.

8. Gummilager nach einem der Ansprüche 1 bis 7, **dadurch gekennzeichnet, dass** der Kreuzverband zwischen den Fasern (6, 6') gleicher axialer Belastbarkeit derart ausgebildet ist, dass eine erste Faser (6) der inneren Kontur (8) eines Freigrabens (4, 4') eine Verbindung mit einem axialen Ende des Lagerinnenteils (1) und der Außenhülse (2) hat, während eine zweite Faser (6') der inneren Kontur (8) des anderen Freigrabens (4, 4') mit dem anderen axialen Ende des Lagerinnenteils (1) und der Außenhülse (2) verbunden ist.

9. Gummilager nach einem der Ansprüche 1 bis 8, **dadurch gekennzeichnet, dass** der von dem Elastomer (3) gebildete Druckkörper axial verlaufende Durchbrüche (7) aufweist, durch welche das Lager in Umfangsrichtung unterschiedliche radiale Steifigkeiten besitzt.

10. Gummilager nach einem der Ansprüche 1 bis 9, **dadurch gekennzeichnet, dass** auf den die Konturen (8) der Freigräben (4, 4') festlegenden Fasern (6, 6') lokal zusätzliche Ausbeulungen (9) ausgebildet sind.

11. Gummilager nach Anspruch 10, **dadurch gekennzeichnet, dass** die zusätzlichen Ausbeulungen (9) auf der Innenkontur (8) der Freigräben (4, 4') in der Umgebung der Punkte größter Materialdicke des Elastomers (3) im Bereich seiner Verbindung mit dem Innenteil (1) ausgebildet sind.

## Claims

1. Rubber bearing, preferably a simple rubber bearing, comprising an, in particular, cylindrical inner part (1), a tubular outer sleeve (2) disposed coaxially around the inner part (1), as well as a thrust body made of an elastomer (3), which is disposed between the inner part (1) and the outer sleeve (2) and joined to them by vulcanization, in which bearing there extend into the elastomer (3), in each case from the axial bearing ends, two troughs, described as open troughs (4, 4'), which run in axial direction into the bearing interior in a completè circle around the bearing axis (5) and of which the radial distance from the bearing axis (5) and/or the width cyclically continuously varies, wherein between the two open troughs (4, 4') with regard to their shape, which is determined by the variation of the radial distance from the bearing axis (5) and/or of the width and preferably follows the same cycle, there is a phase displacement and in the thrust body formed by the elastomer (3) fibres (6, 6') of identical axial loading capacity by virtue of an alternating running direction form a diagonal bracing, with the result that, given bearings of an otherwise fundamentally identical construction, the ratio of radial to axial stiffness is variable by virtue of different definition of the angles of the fibres (6, 6'), which form the diagonal bracing, relative to the bearing axis (5) and/or by virtue of different configuration of the contour shapes of the open troughs (4, 4').

2. Rubber bearing according to claim 1, **characterized in that** the axial depth of both open troughs (4, 4'), in relation to the circumference of the bearing, varies and at least in sections both open troughs (4, 4') project beyond the axial centre into the bearing interior, wherein the phase displacement between their shapes is selected in such a way that the bases (10, 10') of the open troughs (4, 4') in the sections of the bearing circumference, in which both open troughs (4, 4') extend beyond the bearing centre, are at a different radial distance from the bearing axis (5).

3. Rubber bearing according to claim 1 or 2, **characterized in that** by virtue of corresponding definition of the angles of the fibres (6, 6'), which form the diagonal bracing, relative to the bearing axis (5) and/or the geometry of the open troughs (4, 4') the ratio of axial to radial stiffness is adjustable in the range between 1:3 and approximately 1:1.

4. Rubber bearing according to one of claims 1 to 3, **characterized in that** the cyclically varying distance of the open troughs (4, 4') from the bearing axis (5) is determined by an approximately sinusoidal shape of their inner contour, which is defined by the respective material thickness of the elastomer in the region of its connection to the bearing inner part (1).

5. Rubber bearing according to one of claims 1 to 3, **characterized in that** the cyclically varying width of the open troughs (4, 4') is determined by an approximately sinusoidal shape of their outer contour, which is defined by the respective material thickness of the elastomer in the region of its connection to the outer sleeve (2) of the bearing.

6. Rubber bearing according to one of claims 1 to 3, **characterized in that** the distance of the open troughs (4, 4') from the bearing axis (5), given a constant width, has an approximately sinusoidal shape **in that** their outer contour, which is defined by the respective material thickness of the elastomer in the region of its connection to the outer sleeve (2) of the bearing, given a corresponding phase displacement relative to the inner contour, likewise follows a sinusoidal course.

7. Rubber bearing according to one of claims 3 to 6, **characterized in that** the sinusoidal shape of the inner and/or of the outer contour of the open troughs (4, 4') comprises at least two cycles, with the result that in the contour shape there are at least two points of maximum material thickness and two points of minimum material thickness of the elastomer in the region of its connection to the inner part (1) and/or the outer sleeve (2).

8. Rubber bearing according to one of claims 1 to 7, **characterized in that** the diagonal bracing between the fibres (6, 6') of identical axial loading capacity is designed in such a way that a first fibre (6) of the inner contour (8) of one open trough (4, 4') has a connection to one axial end of the bearing inner part (1) and to the outer sleeve (2), while a second fibre (6') of the inner contour (8) of the other open trough (4, 4') is connected to the other axial end of the bearing inner part (1) and to the outer sleeve (2).

9. Rubber bearing according to one of claims 1 to 8, **characterized in that** the thrust body formed by the elastomer (3) has axially extending through-holes (7), by virtue of which the bearing has differing degrees of radial stiffness in peripheral direction.

10. Rubber bearing according to one of claims 1 to 9, **characterized in that** additional bulges (9) are formed locally on the fibres (6, 6') defining the contours (8) of the open troughs (4, 4').

11. Rubber bearing according to claim 10, **characterized in that** the additional bulges (9) are formed on the inner contour (8) of the open troughs (4, 4') in the area surrounding the points of maximum material thickness of the elastomer (3) in the region of its connection to the inner part (1).

## Revendications

1. Support en caoutchouc, de préférence support en caoutchouc simple, avec une pièce intérieure (1) notamment cylindrique, une douille extérieure (2) disposée coaxialement autour de la pièce intérieure (1) ainsi qu'un corps de pression constitué d'un élastomère (3), inséré entre la pièce intérieure (1) et la douille extérieure (2) et relié à celles-ci par vulcanisation, dans lequel s'étendent dans l'élastomère (3) dans l'intérieur du support deux rigoles, dites rigoles ouvertes (4, 4'), chacune à partir des extrémités axiales du support, dans la direction axiale, autour de l'axe (5) du support sur la totalité de la circonférence, dont la distance radiale à l'axe (5) du support et/ou dont la largeur sont modifiées en continu de façon cyclique, dans lequel il existe une translation de phase entre les deux rigoles ouvertes (4, 4') en ce qui concerne leur tracé, déterminée par la variation de la distance radiale à l'axe (5) du support et/ou la largeur et de préférence suivant le même cycle, et dans le corps de pression formé par l'élastomère (3), les fibres (6, 6') de capacité de charge axiale identique constituent un assemblage en croix par une direction changeante du tracé de sorte que, dans des supports ayant par ailleurs une construction de base identique, le rapport entre la rigidité radiale et la rigidité axiale est variable par une détermination différente de l'angle des fibres (6, 6') formant l'assemblage en croix avec l'axe (5) du support, et/ou par une conformation différente des tracés des contours des rigoles ouvertes (4, 4').

2. Support en caoutchouc selon la revendication 1, **caractérisé en ce que** la profondeur axiale des deux rigoles ouvertes (4, 4') par rapport à la périphérie du support varie, les deux rigoles ouvertes pénètrent au moins par tronçons dans l'intérieur du support en dépassant axialement le milieu, et la translation de phase existant entre leurs tracés est choisie en sorte que les fonds (10, 10') des rigoles ouvertes (4, 4') dans les tronçons de la périphérie de support dans lesquels elles s'étendent au-delà du milieu du support, présente un écart radial variable avec l'axe (5) du support.

3. Support en caoutchouc selon la revendication 1 ou 2, **caractérisé en ce que** le rapport entre la rigidité axiale et la rigidité radiale est réglable dans la plage située entre 1 : 3 et à peu près 1 : 1, par la détermination correspondante de l'angle des fibres (6, 6') formant l'assemblage en croix par rapport à l'axe (5) du support, et/ou par la géométrie des rigoles ouvertes (4, 4').

4. Support en caoutchouc selon l'une des revendications 1 à 3, **caractérisé en ce que** la distance des rigoles ouvertes (4, 4') à l'axe (5) du support variant cycliquement est déterminée par un tracé à peu près sinusoïdal de leur contour intérieur, établi par l'épaisseur de matériau respective de l'élastomère dans la zone de sa liaison avec la pièce intérieure (1).

5. Support en caoutchouc selon l'une des revendications 1 à 3, **caractérisé en ce que** la largeur variant cycliquement des rigoles ouvertes (4, 4') est déterminée par un tracé à peu près sinusoïdal de leur contour extérieur, établi par l'épaisseur de matériau respective de l'élastomère dans la zone de sa liaison avec la douille extérieure (2) du support.

6. Support en caoutchouc selon l'une des revendications 1 à 3, **caractérisé en ce que** la distance entre les rigoles ouvertes (4, 4') et l'axe (5) du support présente un tracé à peu près sinusoïdal à largeur constante, par le fait que leur contour extérieur, établi par l'épaisseur de matériau respective de l'élastomère dans la zone de sa liaison avec la douille extérieure (2) du support, suit également un tracé sinusoïdal en regard du contour intérieur avec une translation de phase correspondante.

7. Support en caoutchouc selon l'une des revendications 3 à 6, **caractérisé en ce que** le tracé sinusoïdal du contour intérieur et/ou du contour extérieur des rigoles ouvertes (4, 4') comporte au moins deux cycles, de sorte que dans le tracé du contour sont fournis au moins deux points d'épaisseur de matériau maximale, et deux points d'épaisseur de matériau minimale de l'élastomère, dans la zone de sa liaison avec la pièce intérieure (1) et/ou avec la douille extérieure (2).

8. Support en caoutchouc selon l'une des revendications 1 à 7, **caractérisé en ce que** l'assemblage en croix entre les fibres (6, 6') ayant une capacité de charge identique, de façon qu'une première fibre (6) du contour intérieur (8) d'une rigole ouverte (4, 4') ait une liaison avec une extrémité axiale de la pièce intérieure (1) et de la douille extérieure (2), tandis qu'une seconde fibre (6') du contour intérieur (8) de l'autre rigole ouverte (4, 4') est reliée à l'autre extrémité axiale de la pièce intérieure (1) et de la douille extérieure (2).

9. Support en caoutchouc selon l'une des revendications 1 à 8, **caractérisé en ce que** le corps de pression constitué par l'élastomère (3) présente des passages (7) s'étendant axialement, grâce auxquels le support possède des rigidités radiales différentes dans la direction de sa périphérie.

10. Support en caoutchouc selon l'une des revendications 1 à 9, **caractérisé en ce que** des bosses locales supplémentaires (9) sont réalisées sur les fibres (6, 6') établissant les contours (8) des rigoles ouvertes (4, 4').

11. Support en caoutchouc selon la revendication 10, **caractérisé en ce que** les bosses supplémentaires (9) sur le contour intérieur (8) des rigoles ouvertes (4, 4') sont réalisées dans l'environnement des points d'épaisseur de matériau plus grande de l'élastomère (3), dans la zone de sa liaison avec la pièce intérieure (1).
